# EUROPEAN PATENT APPLICATION

(11) **EP 0 805 097 A1**
(43) Date of publication of application: **05.11.1997**
(21) Application number: 97850067.6
(22) Date of filing: 29.04.1997
(51) Int. Cl.: B62D 33/037

(54) **Handle for locking and operating of foldable sideboards on vehicle platform**

(30) Priority: 20.08.1996 SE 9603022; 29.04.1996 SE 9601646
(71) Applicant: Rosén, Göran, 640 50 Björnlunda (SE)
(72) Inventor: Rosén, Göran, 640 50 Björnlunda (SE)
(74) Representative: Roth, Ernst Adolf Michael

(57) **Abstract**

Handle for locking and maneuvering a folding vehicle platform flaps (12) at load platforms (10). The load platform is provided with platform stanchions (13) located at internal distances along the platform boarders. Each handle (14) is turnably mounted in a pivot place (15) at upper end of a platform stanchion. In a locked position the handle is mainly located in a right angle against the platform stanchion in at least an upwards open channel in the platform flap supporting against the platform stanchion. The platform flap may be released by turning the handle up, out of the channel/channels. The handle may be provided with a springy locking device, which cooperates with the sides of the channel/channels. Alternatively or besides the handle may be effected by the spring device, which acts to keep the handle either in locked position or in open position.

## Description

### Technical field

The present invention refers to a handle for locking and maneuvering of a folding platform flap on a vehicle platform, where the platform is provided with platform stanchions placed at an internal distance along the platform boarder, in such a way that each handle is turnably mounted in a pivot place at the upper end of the platform stanchion.

### Background to the invention

Handles of the above mentioned kind are usually used to maneuver a mechanism, with which the flap's both ends are secured at a respective platform stanchion. This mechanism comprises usually multiple parts and is therefore expensive to produce.

### Technical problem

The objective with the present invention is to provide a locking device that is cheaper and simpler to produce.

### The solution

For this purpose the invention is characterized in that the pivot place comprises an axle which extends essentially across the longitudinal direction of the platform stanchion and essentially across the pivot axle of the flap, and the handle in locked position extends essentially at a right angle against the platform stanchion in to at least one upwards open channel in a platform flap supporting against the platform stanchion.

### Description of drawings

The invention will be described with reference to an embodiment shown in the accompanying drawings, where
Fig. 1 shows a broken view of a part of a truck platform with a handle according to the invention, and
Fig. 2 and 3 shows the handle in a larger scale in two different usage positions.

### Description of embodiment

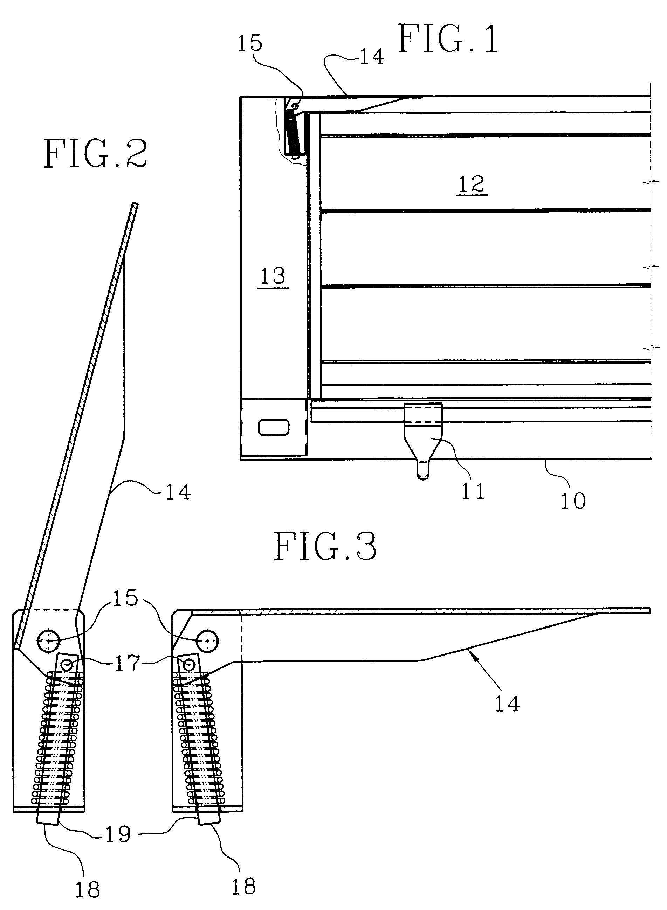

The in Fig. 1 shown truck platform 10 is provided with holder means 11, which together with the border sides of a platform flap 12 forms a pivot axle. This pivot axle makes it possible to fold the flap between the shown position where the flap is leaning towards a vertical platform stanchion 13, and at the down folded lower position, which makes it possible to load and unload cargo on the platform.

The locking and maneuvering of the platform flap 12 take place by means of a handle 14 mounted in the respective platform stanchion 13, which is turnably mounted in a pivot place 15 at the upper end of the platform stanchion. The pivot place comprises an axle that extends essentially across the platform stanchions longitudinal direction and essentially across the pivot axle of the flap. In locked position the handle extends mainly in a right angle against the platform stanchion in at least one upwards open channel in the platform flap supporting against the platform stanchion. The platform flap 12 is released from the stanchion 13 by turning the handle 14 upwards, from the channel/channels.

The handle 10 is affected by a compressing spring 16, whose function is to keep the handle either in the locked position shown in Fig. 3, or in the open position shown in fig. 2. The spring 16 is connected to the handle 14 by a pivot axle 17. The pivot axle 17 is located on one side of the handle's pivot axle 15, when the handle is located in the locked position shown in Fig. 3, and on the other side when the handle is located in the open position shown in Fig. 2. During the turning of the handle from one to the other position the compression spring is first compressed and then decompressed again.

The compression spring 16 is passed on a bar 18 that is turnably secured with one end in the pivot axle 17, and which is displaceable with its opposite end in a hole opening 19 in the platform stanchion 13.

The invention is not limited to the above described embodiment, but several modifications are possible within the frame for the proceeding claim. For example the handle, may be provided with a springy locking device that cooperates with the channels of the flap.

## Claims

1. Handle for locking and maneuvering a folding platform flap (12) at a platform (10) on a loading vehicle, which platform is provided with platform stanchions (13) located at internal distances along the platform boarder, such that each handle is movable in a pivot place (15) at the upper end of a platform stanchion, characterized in, that the pivot place (15) comprises an axle that extends essentially across the longitudinal direction of the platform stanchions (13), and essentially across the pivot axle of the flap (12), and that the handle (14) in the locked position extends essentially at a right angle against the platform stanchion (13) into at least one upwards open channel in the platform flap supporting against the platform stanchion.

2. Handle according to claim 1, characterized in, that the handle (14) is affected by a spring device (16) that acts to keep the handle in either the locked position or the open position.

3. Handle according to claim 1 or 2 characterized in, that the spring device is a compression spring (16), that is connected with the handle (14) by a pivot axle (17).

4. Handle according to claim 3, characterized in, that the pivot axle (17) is located at one side of the pivot axle (15) of the handle (14), when the handle is located in the locked position, and on the other side when the handle is located in the open position, and the compression spring (16) during turning from one to the other position is first compressed and than decompressed.
